# FASCICULE DE BREVET EUROPEEN

(11) **EP 4 486 613 B1**
(45) Date de publication et mention de la délivrance du brevet: **25.02.2026**
(21) Numéro de dépôt: 23703092.9
(22) Date de dépôt: 16.01.2023
(51) Int. Cl.: B60W 30/16, B60W 30/18

(54) **PROCÉDÉ ET DISPOSITIF DE PILOTAGE D'UNE VITESSE D'UN VÉHICULE AUTONOME**
VERFAHREN UND VORRICHTUNG ZUR STEUERUNG DER GESCHWINDIGKEIT EINES AUTONOMEN FAHRZEUGS
METHOD AND DEVICE FOR CONTROLLING THE SPEED OF AN AUTONOMOUS VEHICLE

(30) Priorité: 28.02.2022 FR 2201767
(43) Date de publication de la demande: 08.01.2025
(73) Titulaire: Stellantis Auto SAS, 78300 Poissy (FR)
(72) Inventeur: VIVET, Luc, 75016 PARIS 16 (FR)
(74) Mandataire: ESIP
(86) Numéro de dépôt international: PCT/FR2023/050051
(87) Numéro de publication internationale: WO 2023/161570

(56) Documents cités:
- US-A1- 2002 026 276
- US-A1- 2010 121 549
- US-A1- 2016 236 685

## Description

L'invention est dans le domaine des systèmes d'aide à la conduite de véhicule autonome. En particulier, l'invention concerne un procédé et procédé de pilotage d'une vitesse d'un véhicule autonome, dit véhicule égo, accostant un véhicule cible, ledit véhicule égo comportant un régulateur de vitesse adaptatif.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Les procédés aptes à assister la conduite du véhicule sont aussi nommés ADAS (de l'acronyme anglais « Advanced Driver Assistance Systems »), systèmes ADAS ou systèmes d'aide à la conduite.

Un régulateur de vitesse véhicule adaptatif, ou ACC (de l'acronyme anglais « Adaptative Cruise Control »), est un système ADAS connu. L'ACC d'un véhicule égo est apte à détecter un véhicule, dit véhicule cible, qui précède le véhicule égo. Le véhicule cible circule sur une même voie de circulation que le véhicule égo.

L'ACC est apte à réguler une vitesse du véhicule égo à partir d'une vitesse du véhicule égo mesurée, à partir d'une mesure d'une vitesse du véhicule cible, à partir d'une mesure d'une distance inter-véhicules et à parti d'un temps inter-véhicule prédéterminé. La distance inter-véhicule est une distance séparant l'arrière du véhicule cible avec l'avant du véhicule égo. En utilisant la vitesse du véhicule égo, un temps inter-véhicules est déterminé à partir de la distance inter-véhicule, et vice-versa. Par exemple, le temps inter-véhicules est un paramètre prédéterminé par le conducteur ou par défaut selon une préconisation de la réglementation en vigueur (2 secondes par exemple).

Lors d'un changement de vitesse de régulation pour atteindre par exemple une vitesse consigne, plusieurs trajectoires de la vitesse véhicule (évolution temporelle de la vitesse véhicule) sont alors possibles. Suivre une trajectoire de vitesse véhicule détermine une accélération du véhicule, et donc un comportement dynamique du véhicule. Certains régulateurs sont configurés pour déterminer une accélération potentielle, une accélération moyenne que doit avoir le véhicule égo pour, au bout d'un temps prédéterminé, atteindre la vitesse du véhicule cible tout en respectant le temps inter-véhicule prédéterminé. Si le véhicule doit freiner pour par exemple diminuer la vitesse et/ou atteindre la distance inter-véhicule prédéterminée, l'accélération potentielle est négative.

On dit que le véhicule égo accoste un véhicule cible lorsque l'ACC détecte un nouveau véhicule cible, par exemple lors d'une activation du système ACC avec la présence d'un véhicule cible avec un distance inter-véhicule inférieure à la distance inter-véhicule prédéterminée, lors d'un rabattement d'un véhicule sur la voie de circulation sur laquelle circule le véhicule égo et devant le véhicule égo à une distance inférieure à la distance inter-véhicule prédéterminée, ou lors d'un rattrapage d'un véhicule cible roulant à une vitesse inférieure à la vitesse du véhicule égo. L'ACC doit alors réguler la vitesse du véhicule en fonction du temps inter-véhicule prédéterminé. Une accélération potentielle est alors déterminée par l'ACC. Cette accélération potentielle est d'autant plus élevée (en valeur absolu) que la distance inter-véhicule est inférieure par rapport à la distance inter-véhicule prédéterminée et que la vitesse du véhicule cible est inférieure par rapport à la vitesse du véhicule égo. Une accélération potentielle élevée génère alors un inconfort dynamique : forte décélération mal ressentie par les passagers du véhicule égo. Cependant cette forte décélération, quoique trop forte, permet rassurer (psychologie) les passagers de véhicule en comprenant que l'ACC a bien détecté le véhicule cible. D'autre part, la distance inter-véhicule tendra rapidement vers la distance inter-véhicule prédéterminé ce qui engendre un sentiment de sécurité.

On connait de US2016/236685 un dispositif et un procédé de commande de sorte qu'un véhicule suive un véhicule précédent.

Un objet de la présente invention est de remédier au problème précité, en particulier de faire en sorte d'avoir un bon compromis entre un confort dynamique/psychologique et une sécurité suffisante.

A cet effet, un premier aspect de l'invention concerne un procédé de pilotage d'une vitesse d'un véhicule autonome, dit véhicule égo, accostant un véhicule cible, ledit véhicule égo comportant un régulateur de vitesse adaptatif, ledit régulateur déterminant une accélération potentielle, *Aₚₒₜ(t),* à un instant *t* donné, ladite accélération potentielle étant fondée sur une mesure d'une vitesse du véhicule égo, sur une mesure d'une distance inter-véhicules et sur une distance inter-véhicules prédéterminée, dite distance prédéterminée, et/ou sur un temps inter-véhicules prédéterminé, dit temps prédéterminé, ladite accélération potentielle étant négative et correspondant à une variation de vitesse sur une durée prédéterminée théoriquement appliquée au dit véhicule égo afin que ledit véhicule égo respecte un critère fondé sur ladite distance prédéterminée et/ou sur ledit temps prédéterminé, ledit régulateur pilotant ladite vitesse dudit véhicule égo à partir de ladite accélération potentielle, ledit procédé comportant les étapes de :
- Acquisition de ladite accélération potentielle, *Aₚₒₜ(t)* ;
- Acquisition d'une accélération instantanée, à un instant *t* donné, dudit véhicule égo, *A_{égo}(t)* ;
- Détermination d'un jerk, *J_{Min}(t),* représentant une variation d'accélération, fondé sur ladite accélération potentielle, sur ladite accélération instantanée et d'un jerk initial prédéterminé strictement négatif, *j0,* ledit jerk étant inférieur ou égal au jerk initial et ledit jerk étant d'autant plus négatif que l'accélération potentielle est négative ;
- Détermination d'une accélération potentielle corrigée, *A_{cor}(t),* fondée sur ledit jerk, ledit jerk limitant la variation de l'accélération potentielle ;
- Régulation de ladite vitesse du véhicule égo par ledit régulateur de vitesse adaptatif fondée sur ladite accélération potentielle corrigée.
   ledit Jerk, *Jₘᵢₙ(t),* est déterminé par la formule *Jₘᵢₙ(t)= k1*(Aₚₒₜ(t)+max(0, A_{égo}(t)))²+j0* où *k1* est un paramètre de réglage prédéterminé négatif, *max(.)* étant la fonction maximum.

Ainsi, la décélération dudit véhicule égo sera limitée par ledit régulateur de vitesse qui est maintenant fondée sur ladite accélération potentielle corrigée. Cette accélération potentielle corrigée est limitée par ledit Jerk. La décélération du véhicule ne sera plus, dans les premiers instants de l'accostage, aussi forte que si ledit régulateur de vitesse reste fondé sur l'accélération potentielle. Ceci implique que ledit critère fondé sur ladite distance prédéterminée et/ou sur ledit temps prédéterminé n'est pas respecté dans les premiers instants de l'accostage. Avec l'invention, ledit véhicule égo se rapproche dudit véhicule cible dans les premiers instants. Puis, ledit véhicule égo décélèrera de plus en plus tant que ledit critère fondé sur ladite distance prédéterminée et/ou sur ledit temps prédéterminé n'est plus respecté. Cependant la variation d'accélération restera maîtrisée et limité par le jerk. L'accélération potentielle corrigé tend vers la valeur de l'accélération potentielle.

La prise en compte de l'accélération initiale dans la détermination du jerk rend possible d'éviter une secousse importante dans le cas d'une accélération initiale positive dudit véhicule égo lorsque ledit véhicule cible s'insère dans la voie sur laquelle circule ledit véhicule. La variation d'accélération restera maîtrisée pour toutes accélération instantanée dudit véhicule égo.

Le véhicule égo décélérant, la vitesse dudit véhicule égo deviendra inférieure à une vitesse du véhicule cible. Alors ledit critère sera mieux respecté, l'accélération potentielle diminuera et la variation de l'accélération potentielle deviendra inférieure au Jerk. L'accélération potentielle corrigé sera progressivement remplacée par l'accélération potentielle.

Par conséquent, le véhicule a un comportement proche de celui d'un conducteur. Grâce à l'invention, la forme de l'accélération en cas d'accostage est modifiée et on attient un bon compris entre confort dynamique (minimiser les variations d'accélération), confort physiologique (avoir une décélération initiale minimum grâce au jerk j0 permettant de comprendre la bonne prise en compte de l'accostage par ledit régulateur de vitesse) et sécurité (avoir une accélération minimum, continuer de décélérer de plus en plus tant que la vitesse du véhicule égo est supérieure à la vitesse du véhicule cible).

Avantageusement, le paramètre *k1* est déterminé par *k1=k2*/*DV,* où *k2* est un paramètre prédéterminé et DV est paramètre représentant une vitesse moyenne.

Avantageusement, ladite accélération potentielle corrigée est déterminée par la formule *A_{cor}(t) = max(Aₚₒₜ(t), A_{cor}(t-Δt)+J_{Min}(t)*ΔT), ΔT* étant une période d'échantillonnage, et *A_{cor}(t-Δt)* étant ladite accélération potentielle corrigée déterminée à la période précédente.

Avantageusement, le jerk initial *j0* est un nombre compris entre -0,1 et -1 m/s³ afin de représenter un lâcher de pied, une variation d'accélération similaire au frein moteur en l'absence d'appui sur une pédale d'accélération.

Avantageusement, ledit jerk est supérieur ou égal à un jerk potentiel fondé sur l'accélération potentielle
Un deuxième aspect de l'invention concerne un dispositif comprenant une mémoire associée à au moins un processeur configuré pour mettre en œuvre le procédé selon le premier aspect de l'invention.

L'invention concerne aussi un véhicule comportant le dispositif.

L'invention concerne aussi un programme d'ordinateur comprenant des instructions qui, lorsque le programme est exécuté par le dispositif selon le deuxième aspect de l'invention, conduisent celui-ci à mettre en œuvre le procédé selon le premier aspect de l'invention.

D'autres caractéristiques et avantages de l'invention ressortiront de la description des modes de réalisation non limitatifs de l'invention ci-après, en référence aux figures annexées, sur lesquelles :
[Fig. 1] illustre schématiquement un dispositif, selon un exemple particulier de réalisation de la présente invention.
[Fig. 2] illustre schématiquement un procédé de pilotage d'une vitesse d'un véhicule autonome, selon un exemple particulier de réalisation de la présente invention.

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

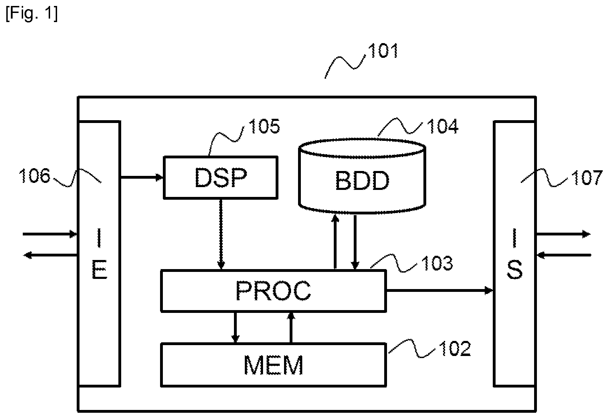

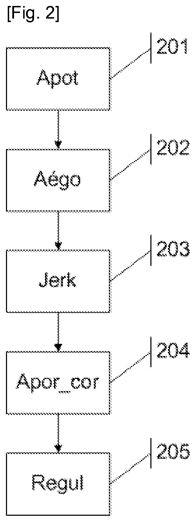

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 2. Dans un mode de réalisation, il correspond à un calculateur de conduite autonome.

Dans la présente invention, le dispositif 101 est compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en œuvre par un processeur 103 d'au moins une étape du procédé tel que décrit ci-avant. Le dispositif comporte aussi une mémoire de masse 104 pour le stockage de données destinées à être conservées après la mise en œuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en œuvre par le procédé selon l'invention et une interface de sortie 107 pour la transmission des données mises en œuvre par le procédé selon l'invention.

Par exemple, l'interface d'entrée 106 peut réceptionner les données suivantes : position ou localisation géographique du véhicule, vitesse et/ou accélération du véhicule, positions/vitesses/accélérations consignes ou prédéterminées, régime moteur, position et/ou course de la pédale d'embrayage, de frein et/ou d'accélération, détection d'autres véhicules ou objets, position ou localisation géographique des autres véhicules ou objets détectés, vitesse et/ou accélération des autres véhicules ou objets détectés, distance inter-véhicules mesurée, déterminée et/ou prédéterminée, temps inter-véhicules mesuré, déterminé et/ou prédéterminé, états de fonctionnement de capteurs, variables de régulation comme l'accélération potentielle, temps absolu, temps relatif, période de régulation, indice de confiance de données issues ou traitées par des capteurs et/ou dispositifs similaires au dispositif 101. Par exemple, les capteurs aptes à fournir des données sont : GPS associé ou non à une cartographie, tachymètres, accéléromètres, RADAR, LIDAR, lasers, ultrasons, caméra ...

La figure 2 illustre schématiquement un procédé de pilotage d'une vitesse d'un véhicule autonome, selon un exemple particulier de réalisation de la présente invention. Ledit véhicule égo comporte un régulateur de vitesse adaptatif. Ledit régulateur détermine une accélération potentielle, *Aₚₒₜ(t),* à un instant *t* donné. Ladite accélération potentielle est fondée sur une mesure d'une vitesse du véhicule égo, sur une mesure d'une distance inter-véhicules et sur une distance inter-véhicules prédéterminée, dite distance prédéterminée, et/ou sur un temps inter-véhicules prédéterminé, dit temps prédéterminé. Ladite accélération potentielle correspond à une variation de vitesse sur une durée prédéterminée théoriquement appliquée au dit véhicule égo afin que ledit véhicule égo respecte un critère fondé sur ladite distance prédéterminée et/ou sur ledit temps prédéterminé, ledit régulateur pilotant ladite vitesse dudit véhicule égo à partir de ladite accélération potentielle.

L'étape 201, Apot, est une étape d'acquisition de ladite accélération potentielle, *Aₚₒₜ(t).* Ladite accélération potentielle est déterminée par le régulateur de vitesse adaptatif à chaque instant t. Cette accélération potentielle est une accélération calculée par l'ACC afin que le véhicule égo, grâce à la régulation, au bout d'un temps prédéterminé, atteigne une vitesse tout en respectant un temps inter-véhicule. Par exemple, l'accélération potentielle est une accélération moyenne que doit avoir le véhicule égo pour, au bout d'un temps prédéterminé, atteindre la vitesse du véhicule cible tout en respectant le temps inter-véhicule prédéterminé.

Généralement, le régulateur est mis en œuvre par un dispositif similaire au dispositif 101. La détermination de la consigne de régulation est réalisée périodiquement, par exemple à une période d'échantillonnage *ΔT. Aₚₒᵣ(t-ΔT)* est l'accélération potentielle de la période précédente classiquement enregistrée en mémoire e masse de type 104.

L'acquisition de l'accélération potentielle est acquise par le dispositif 101 via son interface d'entrée 106. L'accélération potentielle est transmise par exemple par le régulateur de vitesse adaptatif, par un autre dispositif de type 101, par une interface de programmation dite API, acronyme de l'anglais Application Program Interface.

L'étape 202, Aégo, est une étape d'acquisition d'une accélération instantanée, à un instant *t* donné, dudit véhicule égo, *A_{égo}(t).* Ladite accélération instantanée peut être une mesure de l'accélération du véhicule égo à partir d'un capteur (accéléromètre, fusion de données d'accéléromètres, traitement de signal sur des mesures de vitesse, ...) dudit véhicule égo.

L'acquisition de l'accélération instantanée est acquise par le dispositif 101 via son interface d'entrée 106. L'accélération instantanée est transmise par exemple par un capteur dudit véhicule égo, par le régulateur de vitesse adaptatif, par un autre dispositif de type 101, par une interface de programmation dite API, acronyme de l'anglais Application Program Interface.

L'étape 203, Jerk, est une étape de détermination d'un jerk, *J_{Min}(t).* Ledit jerk représente une variation d'accélération. La détermination dudit jerk est fondée sur ladite accélération potentielle, sur ladite accélération instantanée et d'un jerk initial prédéterminé strictement négatif, *j0.* Ledit jerk est inférieur ou égal au jerk initial. Ledit jerk est d'autant plus négatif que l'accélération potentielle est négative.

Avantageusement, le jerk initial *j0* est un nombre compris entre -0,1 et -1 m/s³, préférentiellement proche de -0,5 m/s³. D'autres valeurs sont admissibles. Ainsi, le jerk initial représente un lâcher de pied, une variation d'accélération similaire au frein moteur en l'absence d'appui sur une pédale d'accélération, en particulier lors des premiers instants de l'accostage.

Avantageusement, ledit jerk est supérieur ou égal à un jerk potentiel fondé sur l'accélération potentielle. Par exemple, le jerk potentiel à un instant *t* est déterminé par l'équation *(Aₚₒₜ(t)- Aₚₒₜ(t-ΔT))*/*ΔT* ou par une fonction basée sur la variation de l'accélération potentielle. Ainsi, une accélération potentielle corrigée, comme décrite ci-après, sera plus grande (moins négative) que l'accélération potentielle. Si le régulateur de vitesse est fondé sur l'accélération de consigne corrigée, alors le véhicule va moins freiner brusquement. La décélération dudit véhicule égo sera moins forte.

Dans un mode opératoire, ledit jerk est égale audit jerk initial lorsque l'accélération instantanée est supérieure ou égale à la valeur absolue de l'accélération potentielle. Ainsi, grâce à l'invention, dès les premiers instants, le véhicule décéléra plus. Cette décélération, sans être trop forte, sera ressentie par les passagers du véhicule égo qui comprendront que l'ACC a bien détecter une cible.

Selon l'invention, ledit Jerk, *Jₘᵢₙ(t),* est déterminé par la formule *J_{Min}(t)= k1*(Aₚₒₜ(t)+max(0, A_{égo}(t)))²+j0* où *k1* est un paramètre de réglage prédéterminé négatif, *max(.)* étant la fonction maximum.

Avantageusement, le paramètre *k1* est déterminé par *k1=k2*/*DV,* où *k2* est un paramètre prédéterminé et DV est paramètre représentant une vitesse moyenne. Par exemple DV est une moyenne des différences de la vitesse dudit véhicule égo et de la vitesse dudit véhicule cible. Préférentiellement, DV est un nombre supérieur à 0 et inférieure à100 km/h, et peut être 50 km/h. k2 est un nombre déterminé à partir d'équations physiques d'une trajectoire de vitesse sur une durée prédéterminée. Par exemple, k2 peut être un nombre compris entre -1 et -10, préférentiellement proche de -3,8. Par exemple, k1 est un nombre compris entre -0,001 et -1, préférentiellement dans la plage -0,06 à -0,9. On peut également voir k1 comme un paramètre de réglage qui permet de typer un régulateur de vitesse adaptatif basée sur l'accélération de consigne telle que décrite dans l'invention.

Ledit jerk est d'autant plus négatif que l'accélération du véhicule égo est positive. Ainsi, si avant les premiers instants de l'accostage le véhicule égo était en train d'accélérer alors ledit jerk sera plus négatif et le véhicule égo, avec l'invention, sera plus réactif.

L'étape 204, Apot_cor, est une étape de détermination d'une accélération potentielle corrigée, *A_{cor}(t),* fondée sur ledit jerk, ledit jerk limitant la variation de l'accélération potentielle. Ainsi, grâce à l'invention, le véhicule décélèrera moins brusquement. Avantageusement, ladite accélération potentielle corrigée est déterminée par la formule *A_{cor}(t) = max(Aₚₒₜ(t), A_{cor}(t-Δt)+J_{Min}(t)*ΔT), ΔT* étant une période d'échantillonnage, et *A_{cor}(t-Δt)* étant ladite accélération potentielle corrigée déterminée à la période précédente. Ainsi, l'accélération potentielle corrigée sera l'accélération la moins négative entre l'accélération potentielle et l'accélération potentielle corrigée à la période précédente qui augmentée d'une variation d'accélération déterminée par ledit jerk. Naturellement, au bout quelques instants, de l'ordre de quelques dizaines ou centaines période d'échantillonnage, l'accélération potentielle corrigée convergera vers l'accélération potentielle déterminée par le régulateur de vitesse de l'état de l'art.

L'étape 205, Regul, est une étape de régulation de ladite vitesse du véhicule égo par ledit régulateur de vitesse adaptatif fondée sur ladite accélération potentielle corrigée.

Par conséquent, le véhicule a un comportement proche de celui d'un conducteur. Grâce à l'invention, la forme de l'accélération en cas d'accostage est modifiée et on attient un bon compris entre confort dynamique (minimiser les variations d'accélération), confort physiologique (avoir une décélération initiale minimum grâce au jerk j0 permettant de comprendre la bonne prise en compte de l'accostage par ledit régulateur de vitesse) et sécurité (avoir une accélération minimum, continuer de décélérer de plus en plus tant que la vitesse du véhicule égo est supérieure à la vitesse du véhicule cible).

La présente invention ne se limite pas aux formes de réalisation décrites ci-avant à titre d'exemples ; elle s'étend à d'autres variantes, dans la limite des revendications ci-jointes.

Ainsi, on a décrit ci-avant un exemple de réalisation avec un certain ordre dans les étapes. Certaines étapes peuvent être réalisées en parallèle ou dans un autre ordre tout en aboutissant au même résultat.

Des équations et calculs ont en outre été détaillés. L'invention n'est pas limitée à la forme de ces équations et calcul, et s'étend à tout type d'autres formes, dans la mesure où celles-ci restent mathématiquement conformes à celle exposée dans les revendications ci-jointes.

## Revendications

1. Procédé de pilotage d'une vitesse d'un véhicule autonome, dit véhicule égo, accostant un véhicule cible, ledit véhicule égo comportant un régulateur de vitesse adaptatif, ledit régulateur déterminant une accélération potentielle, *Aₚₒₜ(t),* à un instant *t* donné, ladite accélération potentielle étant fondée sur une mesure d'une vitesse du véhicule égo, sur une mesure d'une distance inter-véhicules et sur une distance inter-véhicules prédéterminée, dite distance prédéterminée, et/ou sur un temps inter-véhicules prédéterminé, dit temps prédéterminé, ladite accélération potentielle étant négative et correspondant à une variation de vitesse sur une durée prédéterminée théoriquement appliquée au dit véhicule égo afin que ledit véhicule égo respecte un critère fondé sur ladite distance prédéterminée et/ou sur ledit temps prédéterminé, ledit régulateur pilotant ladite vitesse dudit véhicule égo à partir de ladite accélération potentielle, ledit procédé comportant les étapes de :
• Acquisition (201) de ladite accélération potentielle, *Aₚₒₜ(t)* ;
• Acquisition (202) d'une accélération instantanée, à un instant *t* donné, dudit véhicule égo, *A_{égo}(t)* ;
• Détermination (203) d'un jerk, *Jₘᵢₙ(t),* représentant une variation d'accélération, fondé sur ladite accélération potentielle, sur ladite accélération instantanée et d'un jerk initial prédéterminé strictement négatif, *j0,* ledit jerk étant inférieur ou égal au jerk initial et ledit jerk étant d'autant plus négatif que l'accélération potentielle est négative ;
• Détermination (204) d'une accélération potentielle corrigée, *A_{cor}(t),* fondée sur ledit jerk, ledit jerk limitant la variation de l'accélération potentielle ;
• Régulation (205) de ladite vitesse du véhicule égo par ledit régulateur de vitesse adaptatif fondée sur ladite accélération potentielle corrigée ;
**caractérisé en ce que** ledit Jerk, *Jₘᵢₙ(t),* est déterminé par la formule *Jₘᵢₙ(t)= k1*(Aₚₒₜ(t)+max(0, A_{égo}(t)))²+j0* où *k1* est un paramètre de réglage prédéterminé négatif, *max(.)* étant la fonction maximum.

2. Procédé selon la revendication 1, dans lequel le paramètre *k1* est déterminé par *k1=k2*/*DV,* où *k2* est un paramètre prédéterminé et DV est paramètre représentant une vitesse moyenne.

3. Procédé selon l'une des revendications précédentes, dans lequel ladite accélération potentielle corrigée est déterminée par la formule *A_{cor}(t) = max(Aₚₒₜ(t), A_{cor}(t-Δt)+J_{Min}(t)*ΔT), ΔT* étant une période d'échantillonnage, et *A_{cor}(t-Δt)* étant ladite accélération potentielle corrigée déterminée à la période précédente.

4. Procédé selon l'une des revendications précédentes, dans lequel le jerk initial *j0* est un nombre compris entre -0,1 et -1 m/s³ afin de représenter un lâcher de pied, une variation d'accélération similaire au frein moteur en l'absence d'appui sur une pédale d'accélération.

5. Procédé selon l'une des revendications précédentes, dans lequel ledit jerk est supérieur ou égal à un jerk potentiel fondé sur l'accélération potentielle.

6. Dispositif (101) comprenant une mémoire (102) associée à au moins un processeur (103) configuré pour mettre en œuvre le procédé selon l'une des revendications précédentes.

7. Véhicule comportant le dispositif selon la revendication précédente.

8. Programme d'ordinateur comprenant des instructions qui, lorsque le programme est exécuté par le dispositif (101), conduisent celui-ci à mettre en œuvre le procédé selon l'une des revendication 1 à 5.

## Patentansprüche

1. Verfahren zur Geschwindigkeitsregelung eines autonomen Fahrzeugs (im Folgenden "Eigenfahrzeug" genannt), das sich einem Zielfahrzeug nähert. Das Eigenfahrzeug verfügt über einen adaptiven Tempomat, der zu einem gegebenen Zeitpunkt *t eine potenzielle Beschleunigung Aₚₒₜ(t) ermittelt.* Diese potenzielle Beschleunigung basiert auf einer Messung der Geschwindigkeit des Eigenfahrzeugs, einer Messung des Abstands zwischen den Fahrzeugen und einem vorbestimmten Abstand zwischen den Fahrzeugen (im Folgenden "bestimmter Abstand" genannt) und/oder einer vorbestimmten Zeit zwischen den Fahrzeugen (im Folgenden "bestimmte Zeit" genannt). Die potenzielle Beschleunigung ist negativ und entspricht einer Geschwindigkeitsänderung über eine vorbestimmte Zeit, die theoretisch auf das Eigenfahrzeug angewendet wird, sodass das Eigenfahrzeug ein Kriterium erfüllt, das auf dem vorbestimmten Abstand und/oder der vorbestimmten Zeit basiert. Der Tempomat regelt die Geschwindigkeit des Eigenfahrzeugs basierend auf der potenziellen Beschleunigung. Das Verfahren umfasst folgende Schritte:
• Akquisition (201) der genannten Potenzialbeschleunigung, *Aₚₒₜ(t)*;
• Erfassung (202) einer momentanen Beschleunigung des Fahrzeugs ego zu einem gegebenen Zeitpunkt *t, A_{égo}(t)*;
• Bestimmung (203) eines Ruckes, *Jₘᵢₙ(t),* der eine Änderung der Beschleunigung darstellt, basierend auf der potenziellen Beschleunigung, der momentanen Beschleunigung und einem streng negativen vorbestimmten Anfangsruck, *j0 ,* wobei der Ruck kleiner oder gleich dem Anfangsruck ist und der Ruck umso negativer ist, je negativer die potenzielle Beschleunigung ist;
• Bestimmung (204) einer korrigierten potenziellen Beschleunigung, *A_{cor}(t),* auf der Grundlage des Ruckes, wobei der Ruck die Variation der potenziellen Beschleunigung begrenzt;
• Regelung (205) der Fahrzeuggeschwindigkeit durch die adaptive Geschwindigkeitsregelung auf der Grundlage der korrigierten potenziellen Beschleunigung;
**gekennzeichnet dadurch, dass** der genannte Jerk, *Jₘᵢₙ(t),* durch die Formel *Jₘᵢₙ(t)= k1*(Aₚₒᵣ(t)+max(0, A_{égo}(t)))²+j0 bestimmt wird,* wobei *k1* ein vorgegebener negativer Abstimmungsparameter ist und *max(.)* die Maximumfunktion ist.

2. Verfahren nach Anspruch 1, wobei der Parameter *k1 durch k1=k2*/*DV* bestimmt wird, wobei *k2* ein vorbestimmter Parameter und DV ein Parameter ist, der eine Durchschnittsgeschwindigkeit darstellt.

3. Verfahren nach einem der vorhergehenden Ansprüche, wobei die korrigierte Potentialbeschleunigung durch die Formel *A_{cor}(t) = max(Aₚₒᵣ(t), A_{cor}(t-Δt)+J_{Min}(t)*ΔT),bestimmt wird, ΔT* ist die Abtastperiode und *A_{cor}(t-Δt) ist die korrigierte Potentialbeschleunigung, die in* der vorherigen Periode bestimmt wurde.

4. Verfahren nach einem der vorhergehenden Ansprüche, wobei der anfängliche Ruck *j0* eine Zahl zwischen -0,1 und -1 m/s³ ist, ^{die} ein Loslassen des Fußes darstellt, eine Änderung der Beschleunigung ähnlich der Motorbremsung bei fehlendem Druck auf das Gaspedal.

5. Verfahren nach einem der vorhergehenden Ansprüche, wobei der Ruck größer oder gleich einem potenziellen Ruck aufgrund einer potenziellen Beschleunigung ist.

6. Vorrichtung (101) mit einem Speicher (102), der mit mindestens einem Prozessor (103) verbunden ist, der so konfiguriert ist, dass er das Verfahren gemäß einem der vorhergehenden Ansprüche implementiert.

7. Fahrzeug mit der Vorrichtung nach dem vorhergehenden Anspruch.

8. Computerprogramm mit Anweisungen, die, wenn das Programm von dem Gerät (101) ausgeführt wird, das Gerät veranlassen, das Verfahren gemäß einem der Ansprüche 1 bis 5 durchzuführen.

## Claims

1. A method for controlling the speed of an autonomous vehicle, referred to as the ego vehicle, approaching a target vehicle, said ego vehicle having an adaptive cruise control, said cruise control determining a potential acceleration, *Aₚₒₜ(t),* at a given time *t*, said potential acceleration being based on a measurement of the speed of the ego vehicle, on a measurement of an inter-vehicle distance and on a predetermined inter-vehicle distance, referred to as the predetermined distance, and/or on a predetermined inter-vehicle time, referred to as the predetermined time, said potential acceleration being negative and corresponding to a change in speed over a predetermined time theoretically applied to said ego vehicle so that said ego vehicle meets a criterion based on said predetermined distance and/or on said predetermined time, said cruise control controlling said speed of said ego vehicle based on said potential acceleration, said method comprising the steps of:
• Acquisition (201) of said potential acceleration, *Aₚₒₜ(t)*;
• Acquisition (202) of an instantaneous acceleration, at a given instant *t*, of said vehicle ego, *A_{égo}(t)*;
• Determination (203) of a jerk, *J_{Min}(t),* representing a variation of acceleration, based on said potential acceleration, on said instantaneous acceleration and of a strictly negative predetermined initial jerk, *j0 ,* said jerk being less than or equal to the initial jerk and said jerk being all the more negative as the potential acceleration is negative;
• Determination (204) of a corrected potential acceleration, *A_{cor}(t),* based on said jerk, said jerk limiting the variation of the potential acceleration;
• Regulation (205) of said vehicle speed by said adaptive cruise control based on said corrected potential acceleration;
**characterized in that** said Jerk, *Jₘᵢₙ(t),* is determined by the formula *J_{Min}(t)= k1*(Aₚₒᵣ(t)+max(0, A_{égo}(t)))²+j0* where *k1* is a predetermined negative tuning parameter, max*(*.*)* being the maximum function.

2. Method according to claim 1, wherein the parameter *k1* is determined by *k1=k2*/*DV,* where *k2* is a predetermined parameter and DV is a parameter representing an average speed.

3. A method according to any one of the preceding claims, wherein said corrected potential acceleration is determined by the formula *A_{cor}(t) = max(Aₚₒₜ(t), A_{cor}(t-Δt)+J_{Min}(t)*ΔT), ΔT* being a sampling period, and *A_{cor}(t-Δt) being said corrected potential acceleration determined at* the previous period.

4. A method according to any one of the preceding claims, wherein the initial jerk *j0* is a number between -0.1 and -1 m/s^{3 to} represent a release of the foot, a variation in acceleration similar to engine braking in the absence of pressure on an accelerator pedal.

5. A method according to any one of the preceding claims, wherein said jerk is greater than or equal to a potential jerk based on potential acceleration.

6. Device (101) comprising a memory (102) associated with at least one processor (103) configured to implement the method according to one of the preceding claims.

7. Vehicle comprising the device according to the preceding claim.

8. Computer program comprising instructions which, when the program is executed by the device (101), cause the device to implement the method according to any one of claims 1 to 5.
